(19) Europäisches Patentamt
European Patent Office
Office européen des brevets

(11) EP 1 995 150 A2

(12) EUROPEAN PATENT APPLICATION

(43) Date of publication:
26.11.2008 Bulletin 2008/48

(51) Int Cl.:
B62D 5/04 (2006.01)

(21) Application number: 08009511.0

(22) Date of filing: 23.05.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 25.05.2007 JP 2007139214
28.12.2007 JP 2007339348

(71) Applicant: NSK Ltd.
Tokyo 141-8560 (JP)

(72) Inventors:
• Aoki, Yuho
Maebashi-shi Gunma 371-8527 (JP)
• Endo, Shuji
Maebashi-shi Gunma 371-8527 (JP)
• Hisanaga, Tomonori
Maebashi-shi Gunma 371-8527 (JP)

(74) Representative: Grünecker, Kinkeldey,
Stockmair & Schwanhäusser
Anwaltssozietät
Leopoldstrasse 4
80802 München (DE)

(54) Electric power steering apparatus

(57) An electric power steering apparatus includes a first torque command value calculating means (31) that calculates a first torque command value on the basis of steering torque detected by a steering torque detecting means (14), a malfunction torque detecting means (33) that detects malfunction of the steering torque detecting means (14), and a self aligning torque estimating means (321) that estimates self aligning torque transmitted from a road surface to a steering mechanism, and the apparatus further includes a second torque command value calculating means (322) that calculates a torque command value on the basis of the self aligning torque estimated by the self aligning torque estimating means (321), and an switching means (34) that selects the second torque command value calculating means (322).

FIG. 2

**Description**

The present invention claims priority from Japanese Patent Application No. 2007-139214 filed on May 25, 2007 and No. 2007-339348 filed on December 28, 2007, the entire content of which is incorporated herein by command.

BACKGROUND OF INVENTION

Field of the Invention

The present invention relates to an electric power steering apparatus including a torque command value calculating means for calculating a torque command value on the basis of at least steering torque, and an electric motor that provides steering assist force to a steering mechanism, and a motor controlling means for controlling the electric motor on the basis of the torque command value.

Description of the Related Art

Conventionally, as a steering apparatus, an electric power steering apparatus that provides steering assist force to a steering mechanism by driving an electric motor in accordance with steering torque due to a driver steering a steering wheel has been prevalent.

Such types of electric power steering apparatus have been high-powered due to vehicles having electric power steering apparatus that have grown in size. Thus, motor torque thereof has increased, and electric power steering apparatus have been accelerated to design high-current devices.

In this way, as electric power steering apparatus have been made to be high-powered, steering torque at the time of hand-steering in a state in which an electric power steering apparatus is stopped is made greater, which leads to a situation in which it is difficult to steer the steering wheel.

Conventionally, when malfunction of a steering torque sensor or the like has occurred, the safety thereof has been ensured by stopping the electric power steering apparatus. However, because steering torque at the time of hand-steering has been made too great, which has made it difficult to steer it, it has been desired to continue generating steering assist force by controlling the electric motor to be driven even when malfunction of a steering torque sensor or the like occurs.

Therefore, conventionally, an electric power steering apparatus has been known in which, when the steering torque sensor fails, steering torque is estimated on the basis of a vehicle speed signal and a steering angle signal by a steering torque estimating means, and electric machinery is controlled to be driven on the basis of the estimated steering torque (for example, refer to JP-B-3390333, in Fig. 2, on Page 1).

However, in the conventional example disclosed in JP-B-3390333, because the steering torque is estimated on the basis of the vehicle speed signal and the steering angle signal. The control of drive of the electric motor is carried out on the basis of the estimated steering torque. It is impossible to accurately recognize a steering state, such as "release of hands" by a driver on the basis of the estimated steering torque, which leads to a steering state against the driver's intention, such that the steering wheel is automatically turned to one direction, or the like. Therefore, greater discomfort is brought to the driver in a state in which a sense of anxiety is already brought to the driver because a warning lamp indicating malfunction of the electric power steering apparatus is turned on due to failure in the steering torque sensor.

Additionally, reaction force from a road surface is not taken into consideration for estimating steering torque, in a state in which a road surface friction coefficient is low or the like, which is not taken into consideration in a torque estimation model. Thus, it is impossible to accurately estimate torque.

SUMMARY OF INVENTION

In one or more embodiments of the invention, an electric power steering apparatus is provided with to continuously generate steering assist force in consideration of reaction force from a road surface.

According to a first aspect of the invention, an electric power steering apparatus is provided with an electric motor which applies a steering assist torque to a steering mechanism, a steering torque detecting unit which detects a steering torque inputted to the steering mechanism, and a motor controlling unit which controls the electric motor to be driven on the basis of a current command value, wherein a malfunction detecting unit detects a malfunction of the steering torque detecting unit, a first torque command value calculating unit which calculates a steering assist torque command value on the basis of at least the detected steering torque, a second torque command value calculating unit which calculates a torque command value on the basis of a self aligning torque estimating unit estimates a self aligning torque transmitted from a road surface to the steering mechanism, and a switching unit which selects the second torque command value calculating unit in place of the first torque command value calculating unit when the malfunction of the steering torque detecting unit is detected by the malfunction torque detecting unit.

According to a second aspect of the invention, the electric power steering apparatus is provided with a steering angle detecting unit which detects a steering angle of the steering mechanism, wherein the self aligning torque estimating unit is configured to estimate the self aligning torque on the basis of the steering angle.

According to a third aspect of the invention, the electric power steering apparatus is provided with the steering angle detecting unit which detects the steering angle of the steering mechanism, and a vehicle speed detecting unit which detects a vehicle speed, wherein the self aligning torque estimating unit is configured to estimate the self aligning torque on the basis of the steering angle and the vehicle speed.

According to a forth aspect of the invention, the electric power steering apparatus is provided with a side force detecting unit which detects side force applied to front wheels of the vehicle, wherein the self aligning torque estimating unit is configured to correct the self aligning torque on the basis of the side force.

According to a fifth aspect of the invention, the electric power steering apparatus is provided with a friction coefficient estimating unit which estimates a friction coefficient between the road surface and wheels, wherein the self aligning torque estimating unit is configured to correct the self aligning torque on the basis of the estimated friction coefficient.

According to a sixth aspect of the invention, the electric power steering apparatus is provided with an anti-skid controlling unit which controls braking force of the wheels when a locking tendency of wheels at the time of braking is detected, wherein the friction coefficient estimating unit is configured to estimate the friction coefficient on the basis of an operational state of the anti-skid controlling unit.

According to a seventh aspect of the invention, the electric power steering apparatus is provided with a normative yaw rate estimating unit which estimates a normative yaw rate of the vehicle in accordance with the steering angle, and an actual yaw rate detecting unit which detects an actual yaw rate of the vehicle, wherein the friction coefficient estimating unit is configured to estimate the friction coefficient on the basis of a difference between the normative yaw rate and the actual yaw rate.

According to an eighth aspect of the invention, the electric power steering apparatus is provided with the steering angle detecting unit is configured to detect a steering angle on the basis of wheel speeds detected by a wheel speed detecting unit for detecting right and left wheel speeds of front wheels of the vehicle.

According to a ninth aspect of the invention, the electric power steering apparatus is provided with the steering angle detecting unit is configured to detect a steering angle from a steering angle and a relative steering angle calculated on the basis of wheel speeds detected by the wheel speed detecting unit for detecting right and left wheel speeds of the front wheels of the vehicle.

According to a tenth aspect of the invention, the electric power steering apparatus is provided with the second torque command value calculating unit is configured to multiply the self aligning torque estimated by the self aligning torque estimating unit by a gain less than 1 to calculate a torque command value.

In the invention according to the first aspect, the self aligning torque transmitted from a road surface to the steering mechanism is estimated by the self aligning torque estimating means, and a torque command value is calculated by the second torque command value calculating means on the basis of the estimated self aligning torque, and when malfunction of the steering torque detecting means is detected, an output of the torque detected value from the steering torque detecting means is stopped, and the second torque command value calculating means is selected in place of the first torque command value calculating means by the switching means. Therefore, it is possible to determine an accurate torque detected value taking into consideration the self aligning torque transmitted from a road surface.

In the invention according to the second aspect, because the self aligning torque is estimated on the basis of the steering angle, it is possible to accurately detect self aligning torque corresponding to a steering state of the steering mechanism.

In accordance with the third aspect of the electric power steering apparatus, in the invention according to the first aspect, because the self aligning torque is estimated on the basis of the steering angle and the vehicle speed, it is possible to estimate a more accurate self aligning torque in consideration of a driving state of the vehicle.

In the invention according to the fourth aspect, because the self aligning torque is corrected on the basis of the side force, it is possible to estimate a more accurate self aligning torque.

In the invention according to the fifth aspect, because the self aligning torque is corrected on the basis of the friction coefficient, it is possible to estimate a more accurate self aligning torque in consideration of a road surface state.

In the invention according to the sixth aspect, because the friction coefficient is estimated on the basis of an operational state of the anti-skid controlling means, it is possible with high precision to estimate the friction coefficient.

In the invention according to the seventh aspect, because the friction coefficient is estimated on the basis of the normative yaw rate and the actual yaw rate, it is possible with high precision to estimate the friction coefficient.

In the invention according to the eighth aspect, because the steering angle is detected on the basis of the right and left wheel speeds of the front wheels, it is possible to utilize the wheel speed detecting means used for an antilock braking system or the like without providing the steering angle detecting means to the steering mechanism, which makes it possible to decrease the number of components.

In the invention according to the ninth aspect, because the steering angle is calculated on the basis of the right and left wheel speeds of the front wheels of the vehicle, and the steering angle is detected on the basis of the calculated steering angle and the relative steering angle, it is possible to more accurately detect the steering angle.

In the invention according to the tenth aspect, because the self aligning torque is multiplied by a gain less than 1 to calculate the torque command value, it is possible to calculate the optimum torque command value corresponding to reaction force from a road surface.

In accordance with the present invention, the second torque command value calculating means calculates the torque command value on the basis of the self aligning torque estimated by the self aligning torque estimating means. There is an advantage that, when malfunction of the steering torque detecting means is detected, it is possible to determine an accurate torque detected value taking into consideration the self aligning torque transmitted from a road surface. Therefore, it is possible to continue steering assist control without bringing discomfort to the driver even after the steering torque detecting means fails.

Other aspects and advantages of the invention will be apparent from the following description and the appended claims.

BRIEF DESCRIPTION OF THE DRAWINGS

FIG. 1 is a diagram showing a schematic structure of an electric power steering apparatus according to a first embodiment of the present invention;

FIG. 2 is a block diagram showing a concrete example of a controller;

FIG. 3 is a characteristic line graph showing a steering assist torque command value calculation map showing a relationship of steering assist torque command values with a vehicle speed as a parameter;

FIG. 4 is a block diagram showing a detailed structure of a self aligning torque estimating unit;

FIG. 5 is a characteristic line graph showing a nominal value calculation map showing a relationship between a steering angle and a self aligning torque nominal value;

FIG. 6 is a characteristic line graph showing a vehicle speed gain calculation map showing a relationship between a vehicle speed and a vehicle gain;

FIG. 7 is a flowchart showing one example of a torque sensor malfunction detection processing procedure executed by a microcomputer;

FIG. 8 is a flowchart showing one example of a steering assist control processing procedure executed by a microcomputer;

FIG. 9 is a block diagram showing an embodiment which is applied to a motor having a brush;

FIG. 10 is a block diagram showing an embodiment when a self aligning torque is corrected on the basis of side force; and

FIG. 11 is a block diagram showing an embodiment when a self aligning torque is corrected on the basis of a friction coefficient.

DESCRIPTION OF EXEMPLARY EMBODIMENTS

Hereinafter, embodiments of the present invention will be described with command to the drawings.

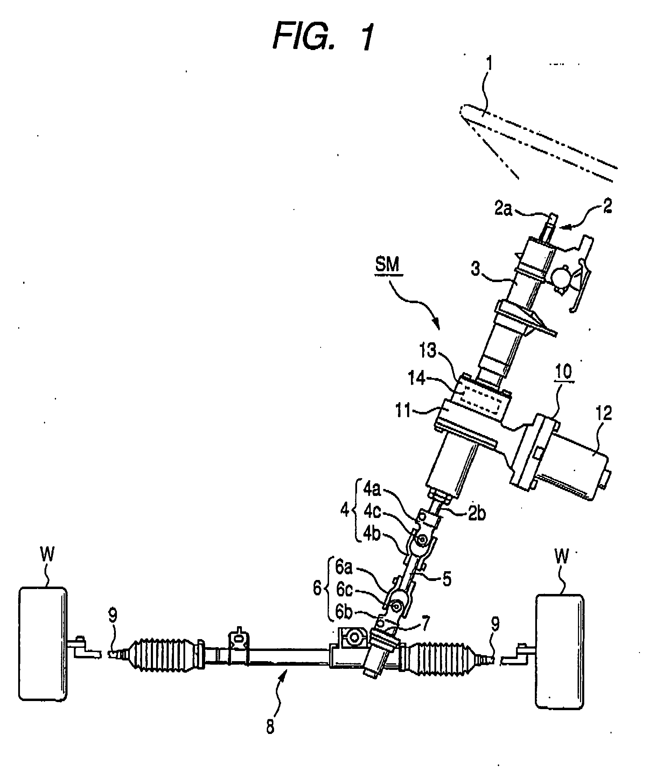

FIG. 1 is a schematic structure showing an embodiment in the present invention. A steering mechanism SM includes a steering shaft 2 having an input shaft 2a to which steering force applied from a driver to a steering wheel 1 is transmitted, and an output shaft 2b joined to the input shaft 2a via an unillustrated torsion bar. This steering shaft 2 is installed rotatably in a steering column 3. One end of the input shaft 2a is joined to the steering wheel 1 and the other end thereof is joined to the unillustrated torsion bar.

Then, the steering force transmitted to the output shaft 2b is transmitted to an intermediate shaft 5 via a universal joint 4 composed of two yokes 4a and 4b and a cross joint portion 4c joining the two yokes. Further, the steering force is transmitted to a pinion shaft 7 via a universal joint 6 composed of two yokes 6a and 6b and a cross joint portion 6c joining the two yokes. The steering force transmitted to the pinion shaft 7 is converted into translatory movement in the vehicle width direction by a steering gear mechanism 8, to be transmitted to right and left tie rods 9, and wheels W are steered to rotate by these tie rods 9.

A steering assist mechanism 10 that transmits steering assist force to the output shaft 2b is joined to the output shaft 2b of the steering shaft 2. The steering assist mechanism 10 includes a speed reducer gear 11 joined to the output shaft 2b and an electric motor 12 composed of, for example, a brushless motor as electric machinery joined to the speed reducer gear 11, that generates steering assist force.

Further, a steering torque sensor 14 serving as a steering torque detecting means is installed in a housing 13 articulated to the steering wheel 1 side of the speed reducer gear 11. The steering torque sensor 14 is to detect steering torque applied to the steering wheel 1 to be transmitted to the input shaft 2a. For example, the steering torque sensor 14 is configured to convert the steering torque into a swing angular displacement of the unillustrated torsion bar interposed between the input shaft 2a and the output shaft 2b, and to detect the swing angular displacement by a contactless magnetic sensor.

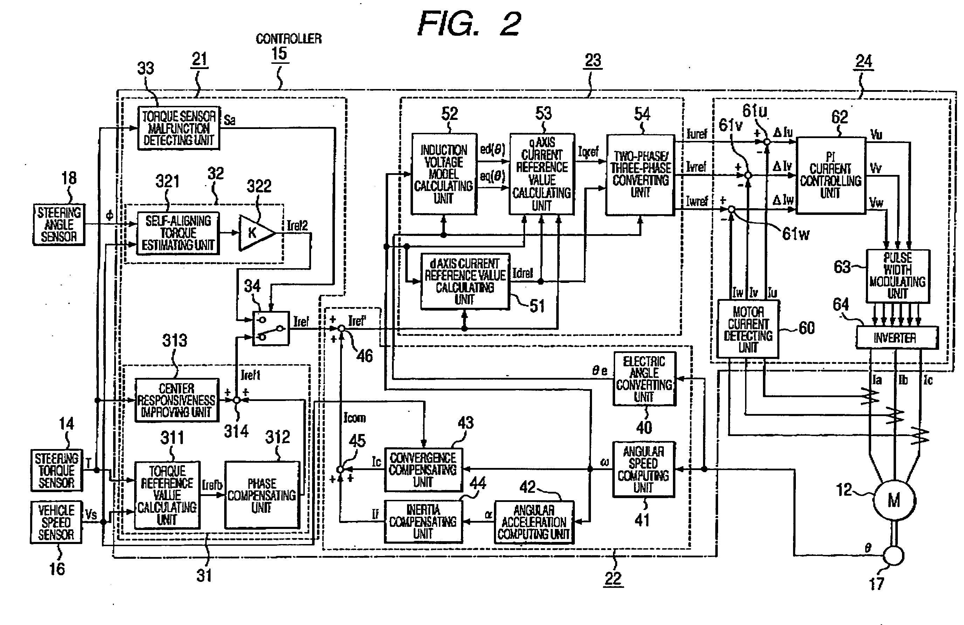

Then, a steering toque detected value T outputted from the steering torque sensor 14 is inputted to a controller 15 as shown in FIG. 2. The controller 15 inputs the toque detected value T from the steering torque sensor 14, a vehicle speed Vs detected by a vehicle speed sensor 16, motor currents Iu to Iw flowing in the electric motor 12, a rotational angle $\theta$ of the electric motor 12 detected by a rotational angle sensor 17 which is composed of a resolver, an encoder, and the like, and a steering angle f detected by a steering angle sensor 18 serving as a steering angle detecting means that detects a steering angle of the steering shaft 2. In the controller 15, a steering assist torque command value Iref serving as a current command value to generate steering assist force corresponding to the torque detected value T and the vehicle speed detected value V to be inputted, by the electric motor 12, is calculated, and various compensation processings are carried out for the calculated steering assist torque command value Iref on the basis of a motor angular speed $\omega$ and a motor angular acceleration $\alpha$, which are calculated on the basis of a rotational angle e, and the value is converted into a d-q axis current command values, and thereafter, two-phase/three-phase conversion is carried out thereto to calculate three-phase current command values Iuref to Iwref. Feedback control processing is carried out for driving currents to be supplied to the electric motor 12 on the basis of the three-phase current command values Iuref to Iwref and motor currents Iu to Iw, to output motor currents Iu, Iv, and Iw to control the driving of the electric motor 12.

That is, the controller 15 is composed of;

a steering assist torque command value calculating unit 21 that calculates a steering assist torque command value Iref serving as a current command value on the basis of the steering torque T and the vehicle speed Vs:
a torque command value compensating unit 22 that compensates the assist torque command value Iref calculated by the torque command value calculating unit 21:
a d-q axis current command value calculating unit 23 that calculates d-q axis current command values on the basis of a compensated steering assist torque command value Iref' compensated by the torque command value compensating unit 22 and carries out two-phase/three-phase conversion for the calculated d-q axis current command values to calculate three-phase current command values Iuref, Ivref, and Iwref: and
a motor current controlling unit 24 that generates motor currents on the basis of the current command values Iuref, Ivref, and Iwref outputted from the d-q axis current command value calculating unit 23 and motor current detected values Iu, Iv, and Iw, so as to control the driving of the electric motor 12.

The steering assist torque command value calculating unit 21 includes;

a first steering assist torque command value calculating unit 31 that calculates a first steering assist torque command value Iref1 on the basis of the steering torque T inputted from the steering torque sensor 14 and the vehicle speed Vs inputted from the vehicle speed sensor 16:
a second steering assist torque command value calculating unit 32 that calculates a second steering assist torque command value Iref2 on the basis of the steering angle f inputted from the steering angle sensor 18 to detect a steering angle f of the steering shaft 2 and the vehicle speed Vs inputted from the vehicle speed sensor 16:
a torque sensor malfunction detecting unit 33 that detects malfunction of the steering torque sensor 14: and
a command value selecting unit 34 serving as a switching means that selects any one of the first steering assist torque command value calculating unit 31 and the second steering assist torque command value calculating unit 32 on the basis of a malfunction detection signal outputted from the torque sensor malfunction detecting unit 33.

The first steering assist torque command value calculating unit 31 includes;

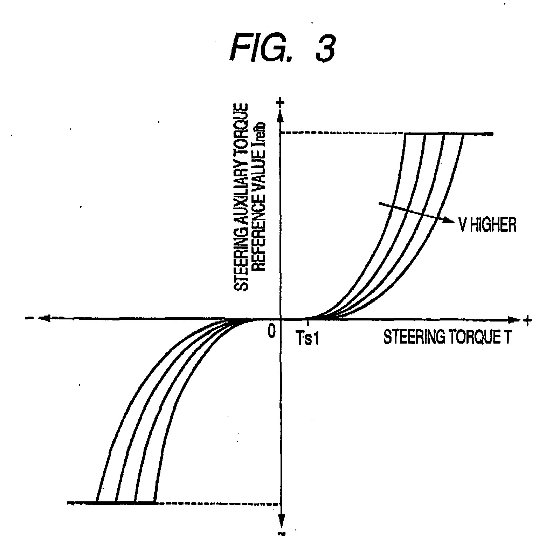

a torque command value calculating unit 311 that calculates a steering assist torque command value Irefb composed of a current command value with command to a steering assist torque command value calculation map shown in FIG. 3 on the basis of the steering torque T and the vehicle speed Vs:
a phase compensating unit 312 that carries out phase compensation for the steering assist torque command value Irefb outputted from the torque command value calculating unit 311 to calculate a phase compensated value Irefb':
a center responsiveness improving unit 313 that increases the responsiveness of control in the vicinity of the steering neutral on the basis of the steering torque T inputted from the steering torque sensor 14, and carries out differential arithmetic processing of the steering torque T so as to realize gentle and smooth steering, to calculate a center responsiveness improving command value Ir to carry out stability securement in an assist characteristic dead zone, and the compensation for static friction: and

an adder 314 that adds a phase-compensated output from the phase compensating unit 312 and the center responsiveness improving command value Ir from the center responsiveness improving unit 313 to calculate the first steering assist torque command value Iref1.

Here, the steering assist torque command value calculation map to be referred to in the torque command value calculating unit 311 is, as shown in FIG. 3, the steering torque T plotted along an abscissa, and the steering assist torque command value Irefb plotted along an ordinate, and it is formed by a characteristic line graph represented as parabolic curved lines by using the vehicle speed Vs as a parameter. The map is set such that, when the steering torque T is within a range from "0" to a near set value Ts1, the steering assist torque command value Irefb is kept as "0," and when the steering torque T exceeds the set value Ts1, first, the steering assist torque command value Irefb increases relatively slowly with respect to an increase in the steering torque T. However, when the steering torque T further increases, the steering assist torque command value Irefb increases rapidly with respect to the increase, and the characteristic curved lines are reduced in those slopes in accordance with the increase in the vehicle speed.

The second steering assist torque command value calculating unit 32 is composed of a self aligning torque estimating unit 321 that estimates self aligning torque SAT on the basis of the steering angle f from the steering angle sensor 18 and the vehicle speed Vs, and an amplifier 322 that amplifies the self aligning torque SAT estimated by the self aligning torque estimating unit 321 at a gain less than "1" to calculate a second steering assist torque command value Iref2.

Here, in the self aligning torque estimating unit 321, by carrying out an arithmetic operation by use of a self aligning torque estimation model having a secondary transfer function Tsat whose parameter is changed on the basis of the vehicle speed Vs inputted from the vehicle speed sensor 16, which is represented by the following formula (1) on the basis of the steering angle f inputted from the steering angle sensor 18, a self aligning torque SAT inputted from a road surface to a rack axis of the steering gear mechanism 8 is estimated.

$$\text{Tsat} = (c_0 s^2 + c_1 s + c_2)/(s^2 + a_1 s + a_2) \quad \text{………} (1)$$

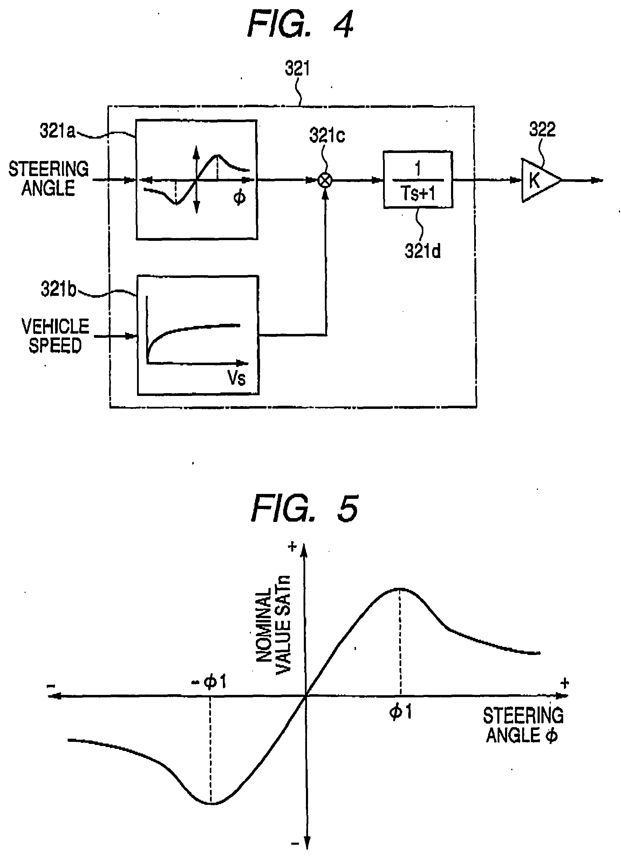

Here $a_1$, $a_2$, $c_0$, $c_1$, and $c_2$ are coefficients to be varied on the basis of the vehicle speed Vs.
In detail, as shown in FIG. 4, the self aligning torque estimation model is composed of;

a nominal value calculating unit 321a that calculates a self aligning torque nominal value SATn with command to a nominal value calculation map on the basis of the steering angle f:
a gain calculating unit 321b that calculates a vehicle speed gain Kv with command to a vehicle speed gain calculation map on the basis of the vehicle speed Vs:
a multiplier 321c that multiplies the self aligning torque nominal value SATn calculated by the nominal value calculating unit 321a and the vehicle speed gain Kv calculated by the vehicle speed gain calculating unit 321b together: and
a primary low-pass filter 321d that carries out low-pass filtering for a multiplied output from the multiplier 321c.

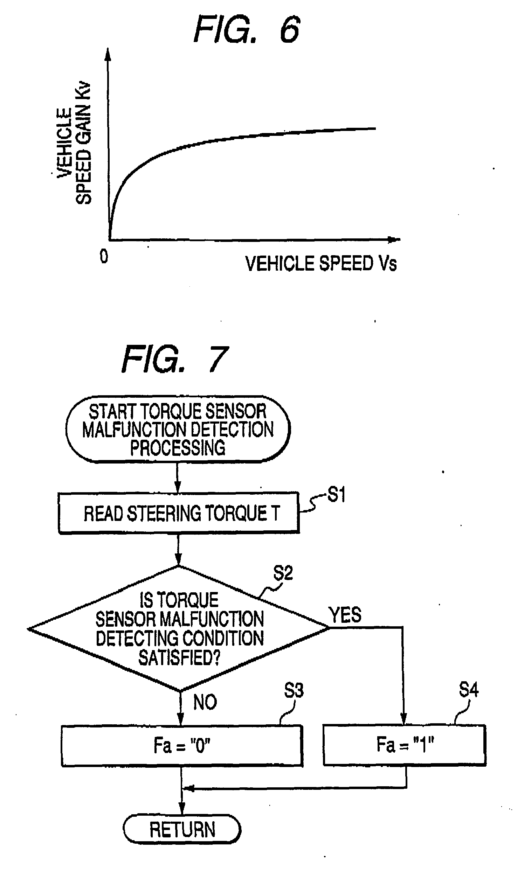

Here, in the nominal value calculation map, as shown in FIG. 5, the characteristic curve L1 is set such that, when the steering wheel 1 is at the neutral position (a straight-ahead driving position) and the steering angle f is "0," the self aligning torque nominal value SATn is "0," and when the steering wheel 1 is turned to the right (or turned to the left) to increase the steering angle f in the positive (or negative) direction, the nominal value SATn increases in the positive (or negative) direction substantially rectilinearly in accordance with the increase of the steering angle f, and when the steering wheel 1 reaches a predetermined steering angle f1 (-f1), the nominal value SATn reaches a positive (or negative) peak, and thereafter, the nominal value SATn decreases in the positive (or negative) direction in accordance with the increase in the steering angle f in the positive (or negative) direction.
Further, in the vehicle speed gain calculation map, as shown in FIG. 6, the characteristic curve L2 is set such that, when the vehicle speed Vs is "0," the vehicle speed gain Kv as well is "0," and when the vehicle speed Vs increases from "0," the vehicle speed gain Kv rapidly increases, and thereafter, the vehicle speed gain Kv slowly increases in accordance with an increase in the vehicle speed Vs.
Further, the torque sensor malfunction detecting unit 33 inputs the steering torque T detected by the steering torque sensor 14. The torque sensor malfunction detecting unit 33 sets a malfunction detection signal Sa to, for example, a logical value "1"
when a steering torque sensor malfunction detecting condition is satisfied, such as when a state in which the steering torque T is not changed for a predetermined time or more when the vehicle is moving is continued, when a state in which the steering torque T exceeds a malfunction set value due to a voltage short set in advance is continued for a predetermined time or more, or when a state in which the steering torque T is less than the malfunction set value due to an earth fault set in advance is continued for a predetermined time or more. Further, the torque sensor malfunction detecting unit 33 sets a malfunction detection signal Sa to a logical value "0" when the steering torque sensor malfunction detecting condition is not satisfied.

Moreover, the command value selecting unit 34 selects the first steering assist torque command value Iref1 calculated by the first torque command value calculating unit 31 described above when the malfunction detection signal Sa outputted from the torque sensor malfunction detecting unit 33 is a logical value "0," and selects the second steering assist torque command value Iref2 calculated by the second torque command value calculating unit 32 described above when the malfunction detection signal Sa is a logical value "1," and outputs the selected first steering assist torque command value Iref1 or second steering assist torque command value Iref2 as a torque command value Iref to the adder 46.

The command value compensating unit 22 includes;

at least an electric angle converting unit 40 that converts a motor rotational angle θ detected by the rotational angle sensor 17 into an electric angle θe:
an angular speed calculating unit 41 that differentiates the motor rotational angle θ detected by the rotational angle sensor 17 to calculate a motor angular speed ω:
an angular acceleration calculating unit 42 that differentiates the motor angular speed ω calculated by the angular speed calculating unit 41 to calculate a motor angular acceleration α:
a convergence compensating unit 43 that compensates the convergence of yaw rate on the basis of the motor angular speed ω calculated by the angular speed calculating unit 41: and
an inertia compensating unit 44 that compensates an amount of torque generated by inertia of the electric motor 12 on the basis of the motor angular acceleration α calculated by the angular acceleration calculating unit 42 to prevent deterioration in inertia response or control responsiveness.

Here, the vehicle speed Vs detected by the vehicle speed sensor 16 and the motor angular speed ω calculated by the angular speed calculating unit 41 are inputted to the convergence compensating unit 43. The convergence compensating unit 43 multiplies the vehicle speed Vs by a convergence controlling gain Kc varied in accordance with the motor angular speed o so as to brake the movement that the steering wheel 1 is turned to rotate in order to improve the convergence of yaw of the vehicle, to calculate a convergence compensated value Ic.

Then, the inertia compensated value Ii calculated by the inertia compensating unit 44 and the convergence compensated value Ic calculated by the convergence compensating unit 43 are added by the adder 45 to calculate a command compensated value Icom, and the command compensated value Icom is added to the steering assist torque command value Iref outputted from the steering assist torque command value calculating unit 21 by the adder 46 to calculate a compensated steering assist torque command value Iref', and the compensated steering assist torque command value Iref' is outputted to the d-q axis current command value calculating unit 23.

Further, the d-q axis current command value calculating unit 23 includes:

a d axis current command value calculating unit 51 that calculates a d axis current command value Idref on the basis of the compensated steering assist torque command value Iref' and the motor angular speed ω:
an induction voltage model calculating unit 52 that calculates a d axis EMF component ed(θ) and a q axis EMF component eq(θ) of a d-q axis induction voltage model EMF (Electro Magnetic Force) on the basis of the electric angle θe outputted from the electric angle converting unit 40 and the motor angular speed ω outputted from the angular speed calculating unit 41:
a q axis current command value calculating unit 53 that calculates a q axis current command value Iqref on the basis of the d axis EMF component ed(θ) and the q axis EMF component eq(θ) outputted from the induction voltage model calculating unit 52, the d axis current command value Idref outputted from the d axis current command value calculating unit 51, the compensated steering assist torque command value Iref', and the motor angular speed ω: and
two-phase/three-phase converting unit 54 that converts the d axis current command value Idref outputted from the d axis current command value calculating unit 51 and the q axis current command value Iqref outputted from the q axis current command value calculating unit 53 into three-phase current command values Iuref, Ivref, and Iwref.

The motor current controlling unit 24 includes;

a motor current detecting unit 60 that detects motor currents Iu, Iv, and Iw to be supplied to respective phase coils Lu, Lv, and Lw of the electric motor 12:
subtractors 61u, 61v, and 61w that subtract the motor currents Iu, Iv, and Iw detected by the motor current detecting unit 60 respectively from the current command values Iuref, Ivref, and Iwref inputted from the two-phase/three-phase converting unit 54 of the d-q axis current command value calculating unit 23, to determine respective phase current deviations ΔIu, ΔIv, and ΔIw: and

a PI current controlling unit 62 that carries out proportional-integral control for the determined respective phase current deviations ΔIu, ΔIv, and ΔIw, to calculate voltage command values Vu, Vv, and Vw.

Further, the motor current controlling unit 24 includes a pulse width modulating unit 63 to which the voltage command values Vu, Vv, and Vw outputted from the PI current controlling unit 62 are inputted, and which carries out duty calculation on the basis of these voltage command values Vu, Vv, and Vw to calculate duty ratios of the respective phases of the electric motor 12, to form inverter control signals formed of pulse width, modulation (PWM) signals, and an inverter 64 that forms three-phase motor currents Ia, Ib, and Ic on the basis of the inverter control signals outputted from the pulse width modulating unit 63 to output those to the electric motor 12.

Next, the operations of the above-described embodiment will be described.

Assuming that the steering torque sensor 14 is in a normal state, the steering torque T detected by the steering torque sensor 14 in the torque sensor malfunction detecting unit 33 provided to the torque command value calculating unit 21 does not satisfy the torque sensor malfunction detecting condition, and therefore, the malfunction detection signal Sa whose logical value is "0" is outputted to the command value selecting unit 34. Therefore, the first steering assist torque command value calculating unit 31 is selected by the command value selecting unit 34, and the first steering assist torque command value Iref1 outputted from the first steering assist torque command value calculating unit 31 is outputted as a steering assist torque command value Iref to the adder 46.

At this time, it is assumed that the vehicle is stopped with the steering wheel 1 being at the neutral position in a straight-ahead driving state. When the steering wheel 1 is not steered in this state, the steering torque T detected by the steering torque sensor 14 is "0" and the vehicle speed Vs is also "0." Therefore, when the torque command value calculating unit 311 of the first steering assist torque command value calculating unit 31 is referred to the steering assist torque command value calculation map on the basis of the steering torque T and the vehicle speed Vs, the steering assist torque command value Irefb becomes "0," and the first steering assist torque command value Iref1 also becomes "0."

At this time, because the electricmotor 12 is stopped, both of the motor angular speed ω calculated by the angular speed calculating unit 41 and the motor angular acceleration α calculated by the angular acceleration calculating unit 42 in the command value compensating unit 22 are "0." Therefore, because the convergence compensated value Ic calculated by the convergence compensating unit 43 and the inertia compensated value Ii calculated by the inertia compensating unit 44 become "0," the command compensated value Icom also becomes "0," and the compensated steering assist torque command value Iref' outputted from the adder 46 becomes "0."

Therefore, the three-phase current command values Iuref, Ivref, and Iwref calculated by the d-q axis current command value calculating unit 23 also become zero, and because the electric motor 12 is stopped, the motor currents Iu, Iv, and Iw detected by the motor current detecting unit 60 also become "0." Therefore, because the current deviations ΔIu, ΔIv, and ΔIw also become "0" outputted from the subtracters 61u, 61v, and 61w, the voltage command values Vu, Vv, and Vw outputted from the PI current controlling unit 62 also become "0," and because the output of inverter control signals from the pulse width modulating unit 63 is stopped, and the inverter 64 is stopped, the motor currents Iu, Iv, and Iw supplied to the electric motor 12 are also kept as "0," and the electric motor 12 keeps its stopped state.

When the steering wheel 1 is steered to carry out so-called dry steering in the state in which the vehicle is stopped, in accordance therewith, the steering torque T detected by the steering torque sensor 14 becomes a relatively large value, thereby rapidly increasing the steering assist torque command value Iref1 calculated by the first steering assist torque command value calculating unit 31 in accordance with the steering torque T.

Even in this state, because the electric motor 12 is stopped, both of the motor angular speed ω and the motor angular acceleration α are kept as "0," and both of the convergence compensated value Ic calculated by the convergence compensating unit 43 and the inertia compensated value Ii calculated by the inertia compensating unit 44 in the command value compensating unit 22 are kept as "0," and therefore, the command compensated value Icom also becomes "0."

Therefore, the steering assist torque command value Iref is directly supplied to the d-q axis current command value calculating unit 23 from the adder 36, and the three-phase current command values Iuref, Ivref, and Iwref corresponding to the steering assist torque command value Iref are outputted from the d-q axis current command value calculating unit 23 to the motor current controlling unit 24.

Accordingly, the three-phase current command values Iuref, Ivref, and Iwref are outputted directly as current deviations ΔIu, ΔIv, and ΔIw from the subtracters 61u and 61v, and 61w, and PI control is carried out for those deviations by the current controlling unit 62 to be converted into the current command values Vu, Vv, and Vw, and the current command values Vu, Vv, and Vw are supplied to the pulse width modulating unit 63. Inverter control signals are outputted from the pulse width modulating unit 63 to be supplied to the inverter 64, and the three-phase motor currents Ia, Ib, and Ic are outputted from the inverter 64, and the electric motor 12 is driven to rotate so as to generate steering assist force corresponding to the steering torque T.

The steering assist force generated by the electric motor 12 is transmitted to the steering shaft 2 to which the steering force from the steering wheel 1 is transmitted via the speed reduction mechanism 11, and the steering force and the steering assist force are converted into a rectilinear motion in the vehicle width direction by the steering gear mechanism 8 to steer to rotate the right and left wheels W via the tie rods 9, whichmakes it possible to steer to rotate the wheels W at light steering torque.

Then, when the electric motor 12 is controlled to be driven, the motor angular speed $\omega$ calculated by the angular speed calculating unit 41 and the motor angular acceleration $\alpha$ calculated by the angular acceleration calculating unit 42 in the command value compensating unit 22 increase, and in accordance therewith, the convergence compensated value Ic and the inertia compensated value Ii are calculated by the command value compensating unit 22, and those are added together to calculate the command compensated value Icom. When the command compensated value Icom is supplied to the adder 46, the command compensated value Icom is added to the steering assist torque command value Iref to calculate the compensated steering assist torque command value Iref', and in accordance therewith, command value compensation processing is carried out, and differential arithmetic processing for the steering torque T is carried out so as to carry out the stability securement in an assist characteristic dead band, and compensation for static friction in the center responsiveness improving unit 313 of the first steering assist torque command value calculating unit 31, and phase compensation is carried out for the first steering assist torque command value Iref1 in the phase compensating unit 312.

Further, when the vehicle has started to move, because the steering assist torque command value Irefb calculated by the torque command value calculating unit 211 in the first steering assist torque command value calculating unit 31 decreases in accordance with the increase in the vehicle speed Vs detected by the vehicle speed sensor 16, an optimum steering assist torque command value Iref1 corresponding to the vehicle driving state is set, which allows optimum steering assist control corresponding to the vehicle driving state to be carried out.

However, when the steering torque sensor 14 reaches a malfunctioning state while the vehicle is moving, and the steering torque T satisfies the steering torque sensor malfunction detecting condition in the torque sensor malfunction detecting unit 33, the malfunction detection signal Sa whose logical value is "1" is outputted from the torque sensor malfunction detecting unit 33 to the command value selecting unit 34, and the second steering assist torque command value calculating unit 32 is selected in place of the first steering assist torque command value calculating unit 31 described above by the command value selecting unit 34.

Therefore, in the nominal value calculating unit 321a of the self aligning torque estimating unit 321, the self aligning torque nominal value SATn inputted from a road surface to the rack axis of the steering gear mechanism 8 is calculated with command to the nominal value calculation map shown in FIG. 5 on the basis of the steering angle f, and the vehicle speed gain Kv is calculated with command to the vehicle speed gain calculation map shown in FIG. 6 on the basis of the vehicle speed Vs by the vehicle speed gain calculating unit 321b. Then, when the calculated self aligning torque nominal value SATn and vehicle speed gain Kv are multiplied by the multiplier 321c, and low-pass filtering is carried out for the multiplied output from the multiplier 321c by the low-pass filter 321d, a self aligning torque SAT is estimated, and the self aligning torque SAT is multiplied by a gain K less than "1" by the multiplier 322, to calculate the second steering assist torque command value Iref2.

At this time, in the state in which the vehicle is stopped, because the vehicle speed Vs detected by the vehicle speed sensor 16 is "0," the vehicle speed gain Kv calculated by the vehicle speed gain calculating unit 321b becomes "0," and therefore, even when the self aligning torque nominal value SATn calculated by the nominal value calculating unit 321a is a relatively large value, the output from the multiplier 321c becomes "0," and the self aligning torque SAT outputted from the low-pass filter 321b also becomes "0," and the second steering assist torque command value Iref2 outputted from the amplifier 322 becomes "0." Therefore, in a state of dry steering when the vehicle is stopped, even when a driver steers the steering wheel 1, the electric motor 12 keeps the stopped state, which does not allow generation of steering assist force.

However, when the steering wheel 1 is steered in a state in which the vehicle has started to move, even due to a slight increase in the vehicle speed Vs by the vehicle starting to move, the vehicle speed gain Kv calculated by the vehicle speed gain calculating unit 321b rapidly increases, and the road surface frictional force applied to the wheels W is reduced, which allows steering of the steering wheel 1. When the steering angle f detected by the steering angle sensor 18 is increased in, for example, the positive direction from the neutral position by steering the steering wheel 1, the positive self aligning torque nominal value SATn corresponding to the steering angle f is outputted from the nominal value calculating unit 321a according to the increase in the steering angle f. The positive self aligning torque nominal value SATn is multiplied by the vehicle speed gain Kv calculated by the vehicle speed gain calculating unit 321b by the multiplier 321c, and low-pass filtering is carried out for the multiplied output by the low-pass filter 321d, which makes it possible to accurately estimate the self aligning torque SAT inputted from a road surface to the rack axis of the steering gear mechanism 8 when the vehicle is moving.

Then, the estimated self aligning torque SAT is amplified by the amplifier 322, to calculate the second steering assist torque command value Iref2 taking into consideration the self aligning torque SAT, and because the second steering assist torque command value Iref2 is supplied to the adder 46 via the command value selecting unit 34, the compensated steering assist torque command value Iref' to which the command compensated value Icom is added by the adder 46 is supplied to the d-q axis current command value calculating unit 23. When the three-phase current command values Iuref, Ivref, and Iwref calculated by the d-q axis current command value compensating unit 23 are supplied to the motor current controlling unit 24, in the motor current controlling unit 24, feedback control is carried out on the basis of the motor currents Iu, Iv, and Iw detected by the motor current detecting unit 60. The motor currents Ia, Ib, and Ic are supplied to the electric motor 12, to generate steering assist force taking into consideration the self aligning torque SAT by the electric motor 12, which makes it possible to continue the steering assist control.

In this way, in accordance with the above-described embodiment, when the steering torque sensor 14 reaches a malfunctioning state, because reaction force from a road surface is estimated by the self aligning torque estimating unit 321, to calculate a required second steering assist torque command value Iref2 corresponding to the reaction force, and the electric motor 12 is controlled to be driven on the basis of the second steering assist torque command value Iref2, it is possible to generate steering assist force corresponding to the reaction force from a road surface by the electric motor 12, and it is possible to continue the steering assist control required for steering even after the steering torque sensor 14 fails. Accordingly, because reaction force from a road surface is taken into consideration, even when the vehicle is driven on a rainfall road, an icy road, a snowy road, and the like with a low road surface friction coefficient, it is possible to generate optimum steering assist force in accordance with a change in the steering angle f.

In addition, in the above-described embodiment, the case in which the steering angle f when the steering wheel 1 is steered is detected by the steering angle sensor 18 has been described. However, the embodiment is not limited to this case, and the steering angle f may be detected by utilizing wheel speeds $V_{FL}$ and $V_{FR}$ from a wheel speed sensor that detects wheel speeds of the right and left front wheels, which is used for an antilock braking system, a traction control system, or the like.

That is, the steering angle f may be calculated such that the wheel speeds $V_{FL}$ and $V_{FR}$ of the right and left front wheels of the vehicle are detected, and a calculation shown by the following formula (2) is carried out on the basis of the wheel speeds $V_{FL}$ and $V_{FR}$ of the front wheels.

$$\sin(2f) = k_F (V_{FL} - V_{FR}) / (V_{FL} + V_{FR}) \quad \ldots\ldots (2)$$

here $k_F$ is a constant.

In this way, when the steering angle f is calculated on the basis of the wheel speeds $V_{FL}$ and $V_{FR}$, because there is no need to provide the steering angle sensor 18 as in the aforementioned embodiment, and a wheel speed sensor used for another control system can be used, it is possible to suppress an increase in the number of components, and to reduce the cost. Moreover, the steering angle f may be determined such that the motor rotational angle θ detected by the rotational angle sensor 17 is added as a relative steering angle to the steering angle f estimated on the basis of the wheel speeds.

Further, in the above-described embodiment, the case in which the self aligning torque SAT is estimated on the basis of the steering angle f and the vehicle speed Vs by the self aligning torque estimating unit 321 has been described. However, the invention is not limited to this case, and the self aligning torque SAT may be estimated on the basis of only the steering angle f.

Moreover, in the above-described embodiment, the case in which the vehicle speed gain Kv becomes "0" when the vehicle speed Vs is "0" has been described. However, the invention is not limited to the case, and the vehicle speed gain Kv may be fixed to a predetermined value when the vehicle speed Vs is "0," and a steering angular speed ωf in which the steering angle f is differentiated may be calculated, and an angular speed gain Kω corresponding to the steering angular speed ωf maybe set, and the vehicle speed gain Kv and the angular speed gain Kω may be multiplied together to set a gain. In this case, provided that the value in which the vehicle speed gain Kv and the steering angular speed gain Kω are multiplied together is set to a value at which a torque command value at a level directly before the wheels W are steered to rotate when the vehicle is stopped is generated, it is possible to carry out dry steering with relatively light steering force.

In the same way, provided that a steering angular speed gain Kω is set even when the vehicle is moving, and the second steering assist torque command value Iref2 corresponding to the steering angular speed ωf is calculated, it is possible to continue optimum steering assist control corresponding to a steering state of the steering wheel 1 even in a state in which the steering torque sensor 14 reaches a malfunctioning state.

Further, in the above-described embodiment, the case in which the two-phase/three-phase converting unit 54 is provided to the d-q axis current command value calculating unit 23 has been described. However, the invention is not limited to this case. The two-phase/three-phase converting unit 54 may be omitted, and in place thereof, a three-phase/two-phase converting unit may be provided to the output side of the motor current detecting unit 60, and the values may be converted into d axis current Id and q axis current Iq, and deviations between the d axis current command value Idref and the 5 q axis current command value Iqref, and the d axis current Id and the q axis current Iq may be calculated in the two subtractors.

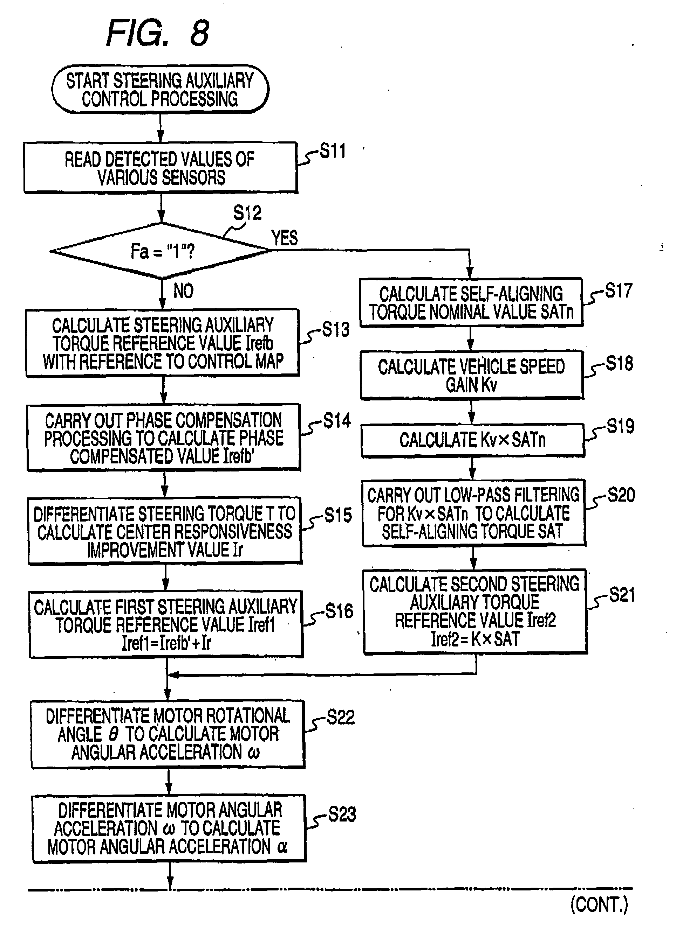

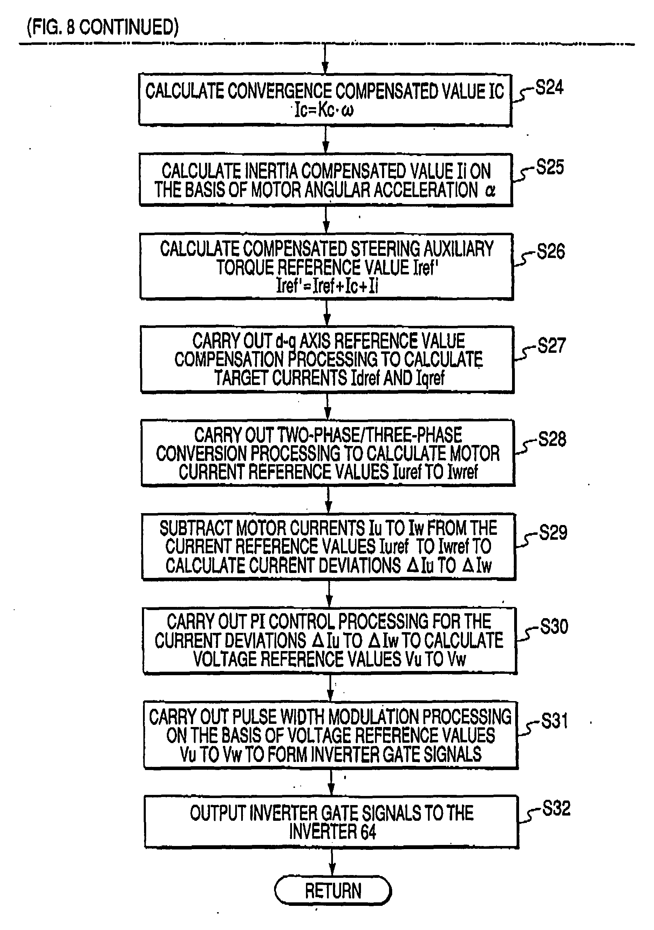

Furthermore, in the above-described embodiment, the case in which the controller 15 is composed of hardware has been described. However, the invention is not limited to this case. Provided that the invention is applied to a microcalculater, the functions of the steering assist torque command value calculating unit 21, the command value compensating unit 22, the d-q axis current command value calculating unit 23, the subtractors 61u to 61w of the motor current controlling unit 24, the PI current controlling unit 62, and the pulse width modulating unit 63 may be processed by software. As the processing in this case, it is recommended that the steering torque sensor malfunction detection processing shown in FIG. 7 and the steering assist control processing shown in FIG. 8 may be executed by the microcalculater.

The steering torque sensor malfunction detection processing is executed as timer interrupt processing at predetermined time (for example, 1 msec) intervals as shown in FIG. 7. First, in step S1, the steering torque T detected by the steering torque sensor 14 is read. Next, the routine proceeds to step S2, and it is judged whether or not the read steering torque T satisfies the torque sensor malfunction detecting condition set in the torque sensor malfunction detecting unit 33 described above. When the torque sensor malfunction detecting condition is not satisfied, it is judged that the steering torque sensor 14 is normal, and the routine proceeds to step S3, and after a torque sensor malfunction flag Fa is reset to "0" denoting that the steering torque sensor 14 is normal, the timer interrupt processing is completed. When the torque sensor malfunction detecting condition is satisfied, it is judged that the steering torque sensor 14 is malfunctioning, and the routine proceeds to step S4, and after the torque sensor malfunction flag Fa is reset to "1" denoting that the steering torque sensor 14 is malfunctioning, the timer interrupt processing is completed.

Further, the steering assist control processing is executed as timer interrupt processing at predetermined time (for example, 1 msec) intervals as shown in FIG. 8. First, in step S11, the detected values of the various sensors such as the steering torque sensor 14, the vehicle speed sensor 16, the rotational angle sensor 17, the steering angle sensor 18, and the motor current detecting unit 60, and the like are read. Next, the routine proceeds to step S12, and it is judged whether or not the sensor malfunction flag Fa set in the torque sensor malfunction detection processing shown in FIG. 7 is set to "1," and when the sensor malfunction flag Fa is reset to "0," the routine proceeds to step S13. In step S13, the steering assist torque command value Irefb is calculated with command to the above-described steering assist torque command value calculation map shown in FIG. 3 on the basis of the steering torque T, and the routine proceeds to step S14.

In step S14, phase compensation processing is carried out for the calculated steering assist torque command value Irefb to calculate the phase-compensated steering assist torque command value Irefb'f. Next, the routine proceeds to step S15, and the steering torque T is differentiated to calculate the center responsiveness improvement command value Ir. Next, the routine proceeds to step S15, and the center responsiveness improvement command value Ir is added to the phase compensated steering assist torque command value Irefb' to calculate the first steering assist torque command value Iref1 (= Irefb'+Ir), and after this value is updated and stored as a steering assist torque command value Iref in a torque command value storage region of a storage device such as a RAM, the routine proceeds to step S22.

On the other hand, when the judged result in step S11 is that the sensor malfunction flag Fa is set to "1," it is judged that the steering torque sensor 14 is malfunctioning, and the routine proceeds to step S17, and the self aligning torque nominal value SATn is calculated with command to the above-described nominal value calculation map shown in FIG. 5 on the basis of the steering angle f. Next, the routine proceeds to step S18, and the above-described vehicle speed gain Kv is calculated with command to the vehicle speed calculation map shown in FIG. 6 on the basis of the vehicle speed Vs. Next, the routine proceeds to step S19, and the self aligning torque nominal value SATn is multiplied by the vehicle speed gain Kv. Moreover, the routine proceeds to step S20, and low-pass filtering is carried out for the multiplied value K∇×SATn to calculate the self aligning torque SAT, and thereafter, the routine proceeds to step S21.

In step S21, the self aligning torque SAT is multiplied by a gain K less than "1" to calculate the second steering assist torque command value Iref2, and this value is updated and stored as a steering assist torque command value Iref in the above-described torque command value storage region of the storage device such as a RAM.

Further, in step S22, the motor rotational angle θ is differentiated to calculate the motor angular speed ω, and the routine proceeds to step S23, and the motor angular speed ω is differentiated to calculate the motor angular acceleration α. Next, the routine proceeds to step S24, and in the same way as in the convergence compensating unit 43, the motor angular speed ω is multiplied by a compensation coefficient Kc set in accordance with the vehicle speed Vs to calculate the convergence compensated value Ic, and thereafter, the routine proceeds to step S25.

In step S25, in the same way as in the inertia compensating unit 44, the inertia compensated value Ii is calculated on the basis of the motor angular acceleration α. Next, the routine proceeds to step S26, and the convergence compensated value Ic and the inertia compensated value Ii calculated in steps S24 and S25 are added to the steering assist torque command value Iref stored in the torque command value storage region of the storage device such as a RAM, to calculate the compensated steering assist torque command value Iref', and thereafter, the routine proceeds to step S27.

In step S27, d-q axis current command value calculation processing which is the same as that of the d-q axis current command value calculating unit 23 is executed onto the calculated compensated steering assist torque command value Iref' to calculate the d axis current command value Idref and the q axis current command value Iqref, and next, the routine proceeds to step S28, and two-phase/three-phase conversion processing is carried out to calculate the motor current command values Iuref to Iwref.

Next, the routine proceeds to step S29, and the motor currents Iu to Iw are subtracted from the motor current command values Iuref to Iwref to calculate current deviations ΔIu to ΔIw, and next, the routine proceeds to step S30, and PI control processing is carried out for the current deviations ΔIu to ΔIw to calculate voltage command values Vu to Vw. Next, the routine proceeds to step S31, and pulse width modulation processing is carried out on the basis of the calculated voltage command values Vu to Vw, to form inverter gate signals. Next, the routine proceeds to step S32, and after the formed inverter gate signals are outputted to the inverter 64, the steering assist control processing is completed, and the routine returns to a predetermined main program.

The processing shown in FIG. 7 corresponds to a malfunction torque detecting means. In the processing shown in FIG. 8, the processing in step S12 corresponds to the switching means, and the processing in steps S13 to S16 corresponds to a first torque command value calculating means, and the processing in steps S17 to S21 corresponds to a second torque command value calculating means, and the processing in steps S22 to S30 corresponds to a motor controlling means.

In this way, by executing the torque sensor malfunction detection processing shown in FIG. 7 and the steering assist control processing shown in FIG. 8 by the microcalculater, in the same way as in the aforementioned embodiment, when the steering torque sensor 14 is normal, the processing in steps S13 to S16 in the steering assist control processing shown in FIG. 8 is executed to calculate the first steering assist torque command value Iref1, and when the steering torque sensor 14 is malfunctioning, the processing in steps S17 to S21 in the steering assist control processing shown in FIG. 8 is executed to calculate the second steering assist torque command value Iref2. Thereby, the self aligning torque SAT formed of reaction force from a road surface to be inputted to the rack axis of the steering gear mechanism 8 is estimated, and the estimated self aligning torque SAT is multiplied by a gain K less than "1" to calculate the second steering assist torque command value Iref2. Therefore, when the steering torque sensor 14 is normal, the electric motor 12 is controlled to be driven on the basis of the first steering assist torque command value Iref1, to carry out accurate steering assist control, and when malfunction is caused in the steering torque sensor 14, the self aligning torque SAT is estimated on the basis of the steering angle f and the vehicle speed Vs, and the estimated self aligning torque SAT is multiplied by a gain K less than "1" to calculate the second steering assist torque command value Iref2. Therefore, even when the steering torque sensor 14 is switched from a normal state to a malfunctioning state, it is possible to continue optimum steering assist control taking into consideration reaction force from a road surface on the basis of the second steering assist torque command value Iref2.

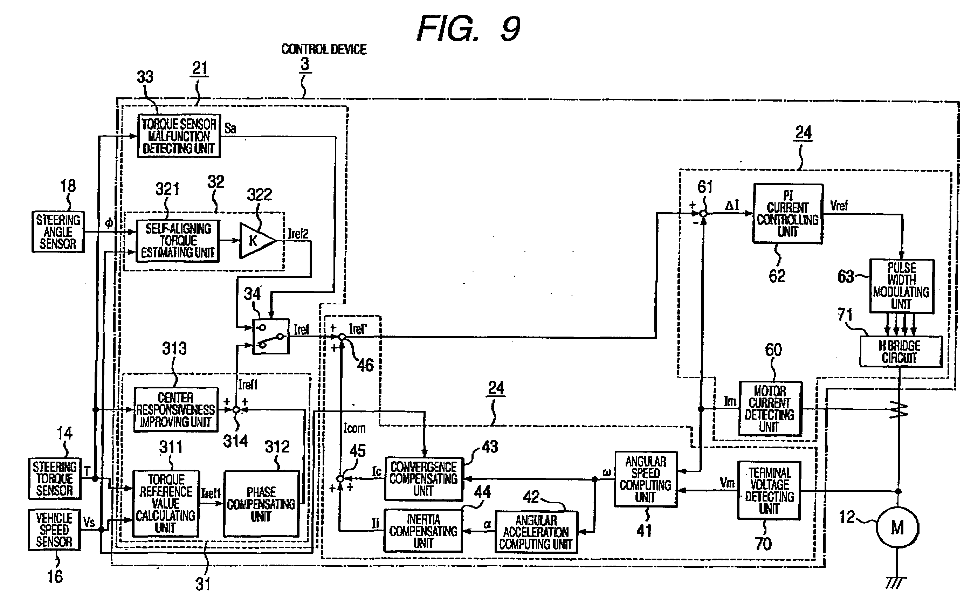

Further, the case in which the embodiment is applied to the brushless motor has been described. However, the invention is not limited to this case. In a case in which the embodiment is applied to a motor having a brush, as shown in FIG. 9, it is recommended that a calculation of the following formula (4) be carried out on the basis of a motor current detected value Im outputted from the motor current detecting unit 60 and a motor terminal voltage Vm outputted from a terminal voltage detecting unit 70 to calculate the motor angular speed ω in the angular speed calculating unit 41. Additionally, it is recommended that the d-q axis current command value calculating unit 23 be omitted, and the compensated steering assist torque command value Iref' be directly supplied to the motor current controlling unit 24, and further, the motor current controlling unit 24 be composed of the subtractor 61 and the PI current controlling unit 62, and moreover, the inverter 64 be replaced with an H bridge circuit 71.

$$\omega \ = \ (Vm - Im \cdot Rm) / K_0 \ \dots\dots (4)$$

here Rm denotes a motor winding resistance, and $K_0$ denotes an electromotive force constant for the motor.

Moreover, in the above-described embodiment, the self aligning torque SAT is estimated on the basis of the steering angle f and the vehicle speed Vs. However, in the self aligning torque estimating unit 321, the self aligning torque SAT may be corrected on the basis of side force Fy applied to the front wheels or a friction coefficient μ between a road surface and the wheels.

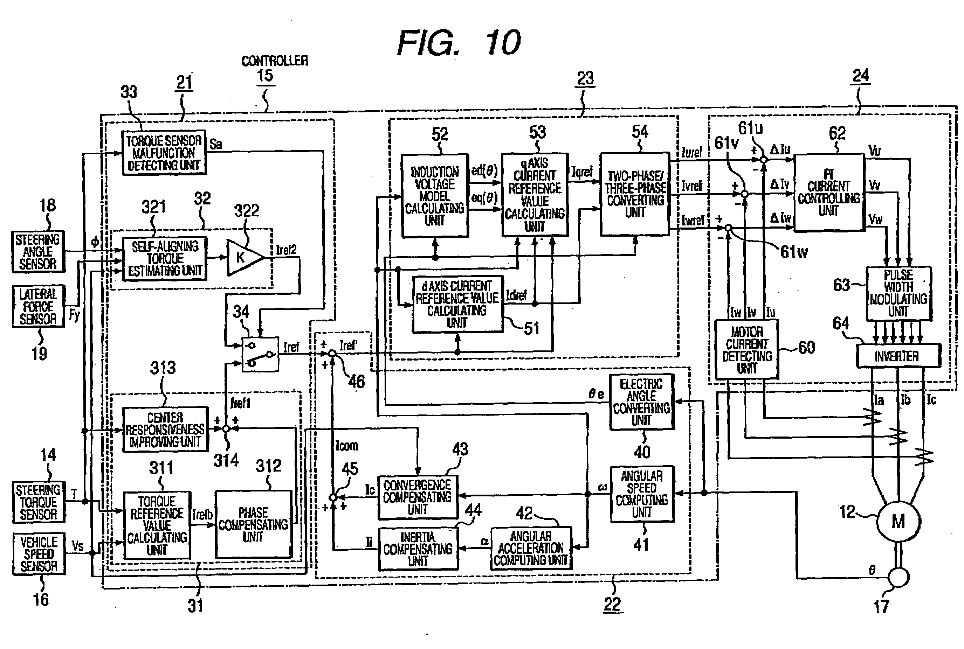

First, as shown in FIG. 10, the side force Fy applied to the front wheels of the vehicle may be inputted from a side force sensor 19, and the self aligning torque SAT may be corrected on the basis of the side force Fy. That is, due to the self aligning torque nominal value SATn being corrected by the nominal value calculating unit 321a or the gain to amplify the self aligning torque SAT being corrected by the amplifier 322, the greater the side force Fy is, the higher the self aligning torque SAT is. In accordance therewith, it is possible to more accurately estimate the self aligning torque SAT.

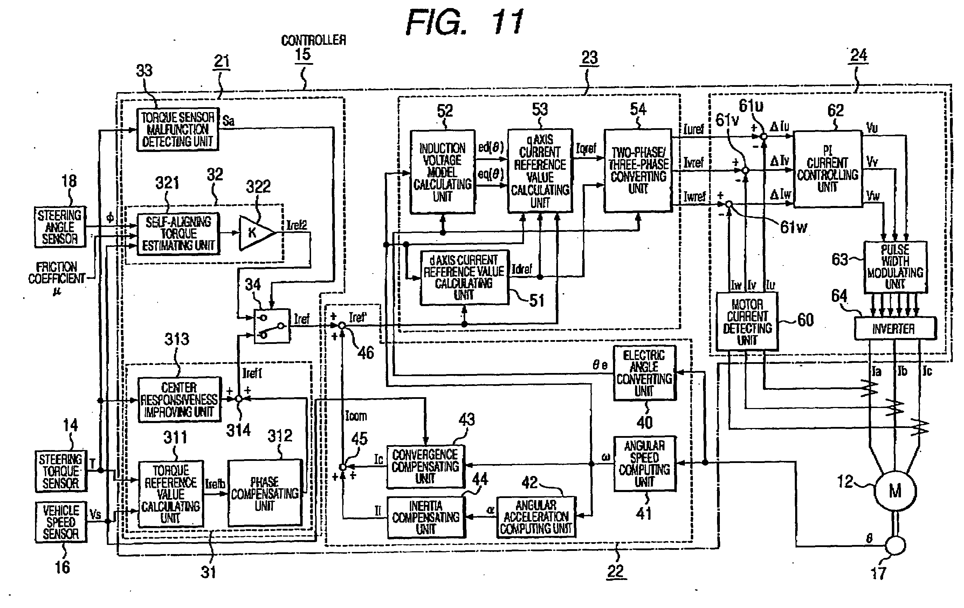

Further, as shown in FIG. 11, a friction coefficient μ between a road surface and the wheels (tires) may be inputted, and the self aligning torque SATmaybe corrected on the basis of the friction coefficient μ. That is, due to the self aligning torque nominal value SATn being corrected by the nominal value calculating unit 321a or the gain to amplify the self aligning torque SAT being amplified by the amplifier 322, the higher the friction coefficient $\mu$ is, the larger the self aligning torque nominal value SATn is. In accordance therewith, it is possible to more accurately estimate the self aligning torque SAT in consideration of a road surface state.

With respect to the friction coefficient $\mu$, in a structure inwhich the friction coefficient $\mu$ is estimated on the basis of an operational state of an ABS device (anti-skid control device) that controls the braking force of the wheels when a locking tendency of the wheels at the time of braking is detected or the friction coefficient $\mu$ is estimated by an ABS device, the estimated friction coefficient $\mu$ may be read. That is, it is estimated that the weaker the braking force at the point in time when a locking tendency is detected is, or the higher the vehicle deceleration at that point in time is, the lower the friction coefficient $\mu$ between a road surface and the wheels is. In accordance therewith, it is possible with high precision to estimate the friction coefficient $\mu$, as a result, it is possible to more accurately estimate the self aligning torque SAT.

Moreover, a normative yaw rate $Y_M$ for the vehicle may be estimated in accordance with the steering angle f, and an actual yaw rate $Y_R$ may be detected by a yaw rate sensor, and the friction coefficient $\mu$ may be estimated on the basis of a difference $\Delta_Y$ between these normative yaw rate $Y_M$ and actual yaw rate $Y_R$. That is, it is estimated that the smaller the difference $\Delta_Y$ between the normative yaw rate $Y_M$ and the actual yaw rate $Y_R$ is, the higher the friction coefficient $\mu$ between a road surface and the wheels is. In accordance therewith, it is possible with high precision to estimate the friction coefficient $\mu$, as a result, it is possible to more accurately estimate the self aligning torque SAT.

Additionally, the friction coefficient $\mu$ between a road surface and the wheels may be estimated on the basis of a steering angle, a yaw rate, lateral acceleration, a vehicle speed, or the like.

**Claims**

1. An electric power steering apparatus comprising:

   an electric motor which applies a steering assist torque to a steering mechanism;
   a steering torque detecting unit which detects a steering torque inputted to the steering mechanism; and
   a motor controlling unit which controls the electric motor to be driven on the basis of a current command value comprising:

      a malfunction detecting unit which detects a malfunction of the steering torque detecting unit;
      a first torque command value calculatingunit which calculates a steering assist torque command value on the basis of at least the detected steering torque;
      a second torque command value calculating unit which calculates a torque command value on the basis of a self aligning torque estimating unit which estimates a self aligning torque transmitted from a road surface to the steering mechanism; and
      a switching unit which selects the second torque command value calculating unit in place of the first torque command value calculating unit when the malfunction of the steering torque detecting unit is detected by the malfunction torque detecting unit.

2. The electric power steering apparatus according to Claim 1, further comprising;

   a steering angle detecting unit which detects a steering angle of the steering mechanism, wherein
   the self aligning torque estimating unit is configured to estimate the self aligning torque on the basis of the steering angle.

3. The electric power steering apparatus according to Claim 1, further comprising:

   the steering angle detecting unit which detects the steering angle of the steering mechanism; and
   a vehicle speed detecting unit which detects a vehicle speed, wherein
   the self aligning torque estimating unit is configured to estimate the self aligning torque on the basis of the steering angle and the vehicle speed.

4. The electric power steering apparatus according to Claim 2, further comprising;

   a side force detecting unit which detects side force applied to front wheels of the vehicle, wherein
   the self aligning torque estimating unit is configured to correct the self aligning torque on the basis of the side force.

**5.** The electric power steering apparatus according to Claim 2, further comprising;

a friction coefficient estimating unit which estimates a friction coefficient between the road surface and wheels, wherein
the self aligning torque estimating unit is configured to correct the self aligning torque on the basis of the estimated friction coefficient.

**6.** The electric power steering apparatus according to Claim 5, further comprising;

an anti-skid controlling unit which controls braking force of the wheels when a locking tendency of wheels at the time of braking is detected, wherein
the friction coefficient estimating unit is configured to estimate the friction coefficient on the basis of an operational state of the anti-skid controlling unit.

**7.** The electric power steering apparatus according to Claim 5, further comprising:

a normative yaw rate estimating unit which estimates a normative yaw rate of the vehicle in accordance with the steering angle; and
an actual yaw rate detecting unit which detects an actual yaw rate of the vehicle, wherein
the friction coefficient estimating unit is configured to estimate the friction coefficient on the basis of a difference between the normative yaw rate and the actual yaw rate.

**8.** The electric power steering apparatus according to Claim 2, wherein

the steering angle detecting unit is configured to detect a steering angle on the basis of wheel speeds detected by a wheel speed detecting unit for detecting right and left wheel speeds of front wheels of the vehicle.

**9.** The electric power steering apparatus according to Claim 2, wherein

the steering angle detecting unit is configured to detect a steering angle from a relative steering angle and a steering angle calculated on the basis of wheel speeds detected by the wheel speed detecting unit for detecting right and left wheel speeds of the front wheels of the vehicle.

**10.** The electric power steering apparatus according to Claim 1, wherein

the second torque command value calculating unit is configured to multiply the self aligning torque estimated by the self aligning torque estimating unit by a gain less than 1 to calculate a torque command value.

# FIG. 1

FIG. 2

# FIG. 3

# FIG. 4

321

321a

STEERING
ANGLE

$\phi$

321c

321b

VEHICLE
SPEED

Vs

$$\frac{1}{Ts+1}$$

321d

322

K

# FIG. 5

+

NOMINAL VALUE SATn

−

−$\phi$1

$\phi$1

STEERING
ANGLE $\phi$

+

−

+

## FIG. 6

## FIG. 7

START TORQUE SENSOR MALFUNCTION DETECTION PROCESSING

READ STEERING TORQUE T ── S1

IS TORQUE SENSOR MALFUNCTION DETECTING CONDITION SATISFIED? S2

YES

NO

Fa = "0" S3

Fa = "1" S4

RETURN

## FIG. 8

START STEERING AUXILIARY
CONTROL PROCESSING

READ DETECTED VALUES OF
VARIOUS SENSORS — S11

Fa = "1"? — S12

YES →

NO ↓

CALCULATE STEERING AUXILIARY
TORQUE REFERENCE VALUE Irefb
WITH REFERENCE TO CONTROL MAP — S13

CARRY OUT PHASE COMPENSATION
PROCESSING TO CALCULATE PHASE
COMPENSATED VALUE Irefb' — S14

DIFFERENTIATE STEERING TORQUE T TO
CALCULATE CENTER RESPONSIVENESS
IMPROVEMENT VALUE Ir — S15

CALCULATE FIRST STEERING AUXILIARY
TORQUE REFERENCE VALUE Iref1
Iref1 = Irefb' + Ir — S16

CALCULATE SELF-ALIGNING
TORQUE NOMINAL VALUE SATn — S17

CALCULATE VEHICLE SPEED
GAIN Kv — S18

CALCULATE Kv × SATn — S19

CARRY OUT LOW-PASS FILTERING
FOR Kv × SATn TO CALCULATE
SELF-ALIGNING TORQUE SAT — S20

CALCULATE SECOND STEERING
AUXILIARY TORQUE
REFERENCE VALUE Iref2
Iref2 = K × SAT — S21

DIFFERENTIATE MOTOR ROTATIONAL
ANGLE θ TO CALCULATE MOTOR
ANGULAR ACCELERATION ω — S22

DIFFERENTIATE MOTOR ANGULAR
ACCELERATION ω TO CALCULATE
MOTOR ANGULAR ACCELERATION α — S23

(CONT.)

(FIG. 8 CONTINUED)

```
          ┌─────────────────────────────────────────────┐
          │ CALCULATE CONVERGENCE COMPENSATED VALUE IC  │─S24
          │                Ic=Kc·ω                       │
          └─────────────────────────────────────────────┘
                            │
          ┌─────────────────────────────────────────────┐
          │ CALCULATE INERTIA COMPENSATED VALUE Ii ON   │─S25
          │ THE BASIS OF MOTOR ANGULAR ACCELERATION α   │
          └─────────────────────────────────────────────┘
                            │
          ┌─────────────────────────────────────────────┐
          │ CALCULATE COMPENSATED STEERING AUXILIARY    │─S26
          │      TORQUE REFERENCE VALUE Iref'           │
          │             Iref'=Iref+Ic+Ii                │
          └─────────────────────────────────────────────┘
                            │
          ┌─────────────────────────────────────────────┐
          │ CARRY OUT d-q AXIS REFERENCE VALUE          │─S27
          │ COMPENSATION PROCESSING TO CALCULATE        │
          │    TARGET CURRENTS Idref AND Iqref          │
          └─────────────────────────────────────────────┘
                            │
          ┌─────────────────────────────────────────────┐
          │ CARRY OUT TWO-PHASE/THREE-PHASE             │─S28
          │ CONVERSION PROCESSING TO CALCULATE MOTOR    │
          │ CURRENT REFERENCE VALUES Iuref TO Iwref     │
          └─────────────────────────────────────────────┘
                            │
          ┌─────────────────────────────────────────────┐
          │ SUBTRACT MOTOR CURRENTS Iu TO Iw FROM THE   │─S29
          │ CURRENT REFERENCE VALUES Iuref TO Iwref TO  │
          │ CALCULATE CURRENT DEVIATIONS ΔIu TO ΔIw     │
          └─────────────────────────────────────────────┘
                            │
          ┌─────────────────────────────────────────────┐
          │ CARRY OUT PI CONTROL PROCESSING FOR THE     │─S30
          │ CURRENT DEVIATIONS ΔIu TO ΔIw TO CALCULATE  │
          │ VOLTAGE REFERENCE VALUES Vu TO Vw           │
          └─────────────────────────────────────────────┘
                            │
          ┌─────────────────────────────────────────────┐
          │ CARRY OUT PULSE WIDTH MODULATION PROCESSING │─S31
          │ ON THE BASIS OF VOLTAGE REFERENCE VALUES    │
          │ Vu TO Vw TO FORM INVERTER GATE SIGNALS      │
          └─────────────────────────────────────────────┘
                            │
          ┌─────────────────────────────────────────────┐
          │ OUTPUT INVERTER GATE SIGNALS TO THE         │─S32
          │              INVERTER 64                     │
          └─────────────────────────────────────────────┘
                            │
                      ( RETURN )
```

FIG. 9

FIG. 10

# FIG. 11

CONTROLLER 15

EP 1 995 150 A2

**REFERENCES CITED IN THE DESCRIPTION**

**Patent documents cited in the description**

- JP 2007139214 A
- JP 2007339348 A

- JP 3390333 B